# EUROPEAN PATENT SPECIFICATION

(11) **EP 1 572 483 B1**
(45) Date of publication and mention of the grant of the patent: **04.04.2007**
(21) Application number: 03813676.8
(22) Date of filing: 12.12.2003
(51) Int. Cl.: B60J 10/00, B60J 10/08, B29C 47/02

(54) **METHOD AND APPARATUS OF FIXING OF SEALING AND MOUNTING STRIPS TO MEMBERS**
VERFAHREN UND VORRICHTUNG ZUR BEFESTIGUNG VON DICHTUNGS- UND MONTAGELEISTEN AN GLIEDERN
PROCEDE ET APPAREIL PERMETTANT DE FIXER DES BANDES D'ETANCHEITE ET DE MONTAGE SUR DES ELEMENTS

(30) Priority: 20.12.2002 GB 0229652
(43) Date of publication of application: 14.09.2005
(73) Proprietor: GDX North America Inc., Dover Delaware 19901 (US)
(72) Inventor: HOGE, Ralf, 42477 Radevormwald (DE); BRONCKHORST, Gregor, 41379 Brüggen (DE)
(74) Representative: Foster, Mark Charles
(86) International application number: PCT/IB2003/005917
(87) International publication number: WO 2004/056599

(56) References cited:
- EP-A- 1 238 786
- DE-A- 3 808 443
- DE-A- 19 809 537
- US-A- 5 693 174
- US-B1- 6 287 406

## Description

### Technical Field

The invention relates to sealing and mounting strips for sealing around members - for example, vehicle closure members, such as doors.

### Background Art

EP-A-1238786 discloses a driving robot to which a window glass is attached by sucking discs. The driving robot drives the window glass so that the peripheral portion of the window glass is moved along or relatively to a machine which forms an extruded part on the periphery of the window glass.

US-B 1-6287406 discloses a window glass serving means on which a window glass is mounted and moved to the location of a robot arm. The robot arm dismounts the window glass from the window glass serving means and moves the window glass to a window glass retaining means, which forms part of an extrusion apparatus. The window glass retaining means then moves the window glass with respect to the extruder.

### Disclosure of Invention

According to a first aspect of the present invention, there is provided the method of manufacturing an assembly, the method including forming the main body portion of the assembly; mounting the assembly on a movement apparatus and moving the assembly on said movement apparatus to respective processing stations, at each of which a manufacturing step of the assembly is performed, wherein at one of said processing stations a sealing or mounting strip is formed on the assembly by a fixed extrusion device, and, while operating the extrusion device to produce the extruded sealing or mounting strip, the sealing or mounting strip is formed along a desired path on the assembly by controlled movement of the assembly with respect to the fixed extrusion device by the said movement apparatus.

According to a second aspect of the present invention, there is provided apparatus for manufacturing an assembly, the apparatus including a plurality of processing stations; means for forming the main body portion of the assembly; a movement apparatus for moving the assembly to respective ones of said processing stations, at each of which a manufacturing step of the assembly is performed, wherein at one of said processing stations a sealing or mounting strip is formed on the assembly by a fixed extrusion device, and, while operating the extrusion device to produce the extruded sealing or mounting strip, the sealing or mounting strip is formed along a desired path on the assembly by controlled movement of the assembly with respect to the fixed extrusion device by the said movement apparatus.

### Brief Description of Drawings

A method of forming a sealing or mounting strip, a method of manufacturing an assembly and apparatus for forming a sealing or mounting strip will now be described by way of example with reference to the accompanying diagrammatic drawings in which:
Figure 1 is a perspective view of a motor vehicle door;
Figure 2 shows the motor vehicle door of Figure 1 mounted for having a sealing or mounting strip formed thereon by a fixed extrusion device;
Figure 3 shows an enlarged view the area A of Figure 1 to which the fixed extrusion device is applying the sealing or mounting strip;
Figure 4 shows a cross-section through a sealing strip formed on a door; and
Figure 5 shows a cross-section through a mounting strip formed on a door to which a sealing strip, is fixed.

In the figures like elements are generally designated with the same reference numeral.

### Best Modes for Carrying Out The Invention

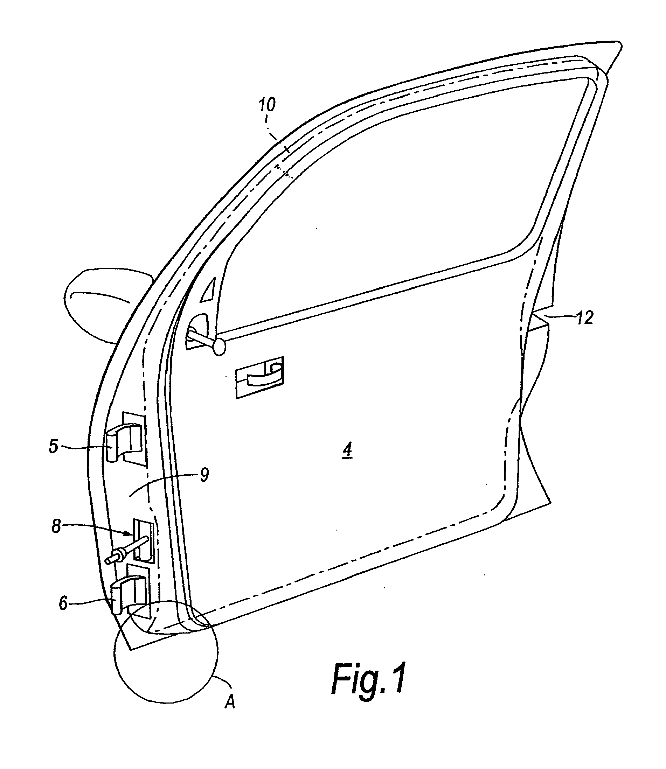

Figure 1 shows a perspective view of a conventional motor vehicle body door 4, a front door in this example which is supported by hinges 5 and 6 its leading edge, a conventional check strap 8 being positioned between the hinges. The seal for sealing between the periphery of the door and the door opening (not shown) in the motor vehicle main body is mounted on the peripheral edge of the door as shown by the chain-dotted line 10. As shown, the path of the seal passes inside (that is, nearer to the inside face of the door than the outside face thereof) of the hinges 5 and 6 and the check strap 8. At the trailing edge of the door, there is a recess 12 for receiving that part of the door latching and locking mechanism which is mounted on the vehicle body itself, and the path of the door seal 10 passes outside this recess.

The door seal is positioned on the door so as to run completely or substantially completely around the periphery of the door as shown in Figure 1. As shown in Figure 1, the position of the door seal on the door varies around the periphery of the door. It is advantageous for the door seal to pass inside the door hinges 5 and 6, rather than outside these items, in order to prevent trapping when the door is opened. It is advantageous for the seal to pass outside the locking mechanism recess 12 in order to allow the striker etc mechanism on the door frame to pass into the recess 12 when the door is closed. In general, however, the door seal is mounted close to the outside of the door so as to act between this relatively outer part of the door and the corresponding part of the door opening when the door is closed. Such relatively outward positioning of the door seal has a number of advantages: thus, it keeps the outer parts of the door aperture relatively clean, by sealing them against the ingress of air-borne dirt and moisture and in this respect is advantageous compared with the more inboard seal positioning which occurs with the type of door seal mounted not on the door itself but on the flange running around the door opening. In addition, the relatively outward positioning of the door seal described is of advantage in reducing wind noise.

In accordance with an aspect of this invention, the seal is formed by extruding an appropriate material, such as synthetic resin, rubber or the like, directly onto the periphery 9 of the door 4.

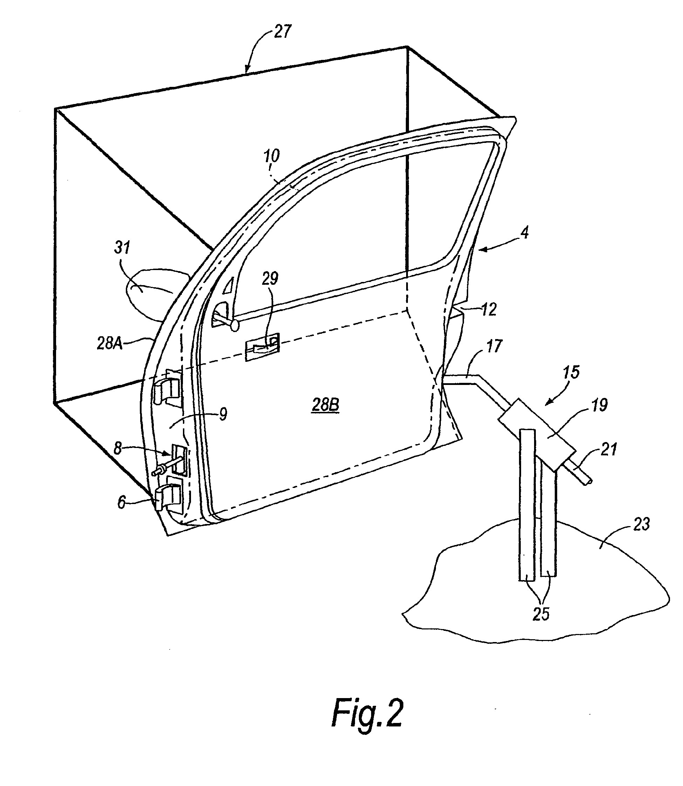

Figure 2 shows an extrusion device 15 for applying the seal to the door 4. The extrusion die 15 comprises an extrusion port 17 from which extrudate is expelled in a controlled manner to form the seal with the desired properties, a main body 19 and an extrudate material supply passage 21 to which extrudate is supplied from an external source (not shown). The extrusion die 15 (including the extrusion port 17 and main body 19) are fixed in position. That is, the extrusion die 15 does not move. In the embodiment, the fixing of the extrusion die 15 is provided by attaching the main body 19 of the extrusion die 15 to the floor 23 of the plant in which the seal is being applied to the door 4. The main body 19 is fixed to the floor 23 by means of supporting legs 25. Of course, it should be appreciated that the extrusion die may be fixed in position by any other suitable means to any other suitable fixed surface or member.

The seal is formed in the desired position shown by the chain-dotted line 10 around the periphery 9 of the door 4 by moving the door 4 with respect to the fixed extrusion die 15. The door 4 is mounted in a frame 27 which clamps the door 4 at four spaced apart positions around the door's edge. The frame 27 is movable by any suitable means (not shown), such as by a robot typically used in automated vehicle fabrication plants. Of course, any other suitable movement means may be employed. The frame 27 is freely rotatable and translatable by the movement means. The movement means is capable accurately positioning the door with respect to the extrusion die 15 in order to allow for precise positioning of the seal on the periphery 9 of the door 4.

The door 4 is formed from two principal metal panels, an outer generally flat panel 28A, which forms the exterior surface of the door when mounted on the vehicle body, and an inner panel 28B comprising the periphery 9, which extends generally perpendicular to the exterior surface, and a generally planar interior surface of the door which lies generally parallel to the exterior surface. This interior surface typically has one or more openings in it to allow the components of the door to be fitted, such as the interior door handle 29, window winding apparatus (not shown), audio loudspeakers (not shown), etc. The outer and inner panels of the door 4 are attached together by any suitable means, such as by folding excess material at the edge of the outer panel tightly over the edge of the inner panel and welding the panels together.

In accordance with the invention, once the main body (comprising the outer and inner panels) of the door 4 is formed, the door is mounted on the frame 27. With the door 4 mounted in this manner, the door :may be moved around the production plant by suitable movement means to various different areas within the production plant, at which various steps in the production of the finished door are performed. For example, the door, supported on the frame 27, may pass to an area within the production plant at which the door 4 is painted. The door 4 may then pass to an area where the door mirror 31 is fitted, to another area where the strap 8 is fitted, etc.

Such automated movement of a door 4 supported by a frame 27, or other suitable means, is typically employed in the manufacturing process of vehicle doors, and other vehicle body components.

A fixed extrusion die 15 can be used to apply the seal around the periphery 9 of the door 4 because movement of the door 4 is provided by movement of the frame 27 to which the door 4 is attached.

A movable extrusion die is more complex, more costly and less reliable than a fixed extrusion die. Provision has to be made to supply extrudate material to the moving extrusion die by means of flexible supply pipes.

According to the embodiment of the present invention being described, these disadvantages are obviated by employing a fixed extrusion die 15. By making use of the frame 27 and movement means already provided in a conventional automated vehicle fabrication plant, little or no additional cost is incurred by providing for movement of the door 4 with respect to the fixed extrusion die 15. The arrangement of the embodiment is additionally advantageous because, at the time of formation of the seal, the step of removing the door 4 from the frame 27 is avoided, as is the step of reattaching the door 4 to the frame 27.

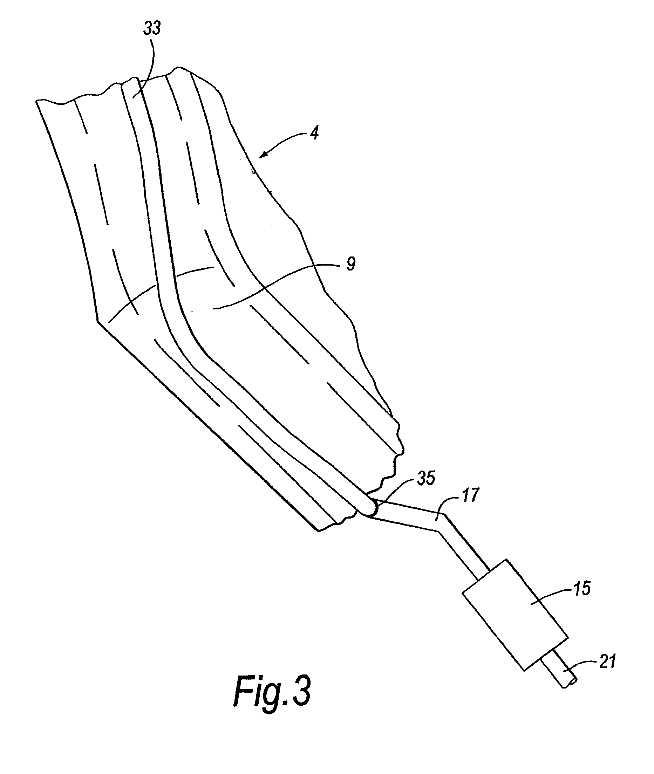

Figure 3 shows in more detail the area A of the door 4 encircled in Figure 1 as the door 4 is moved with respect to the extrusion port 17. A continuous line of extrudate 33 is formed at the desired position on the periphery 9 of the door. The nozzle 35 of the extrusion port 17 provides the extruded material 33 with the desired shape.

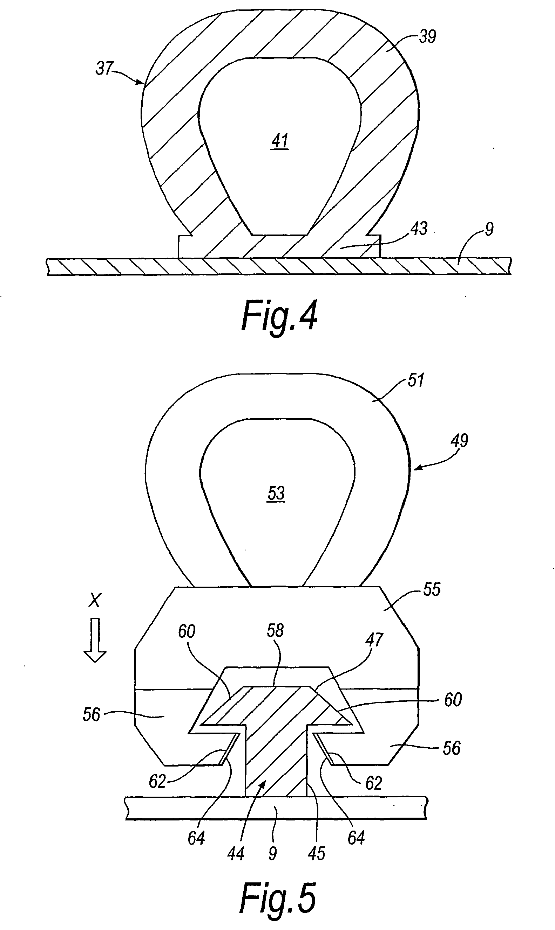

Figure 4 shows a cross-section through the door periphery 9 and the seal 37 formed by the extruded material 33. The seal 37 may comprise a tubular sealing part 39 having a hollow central area 41, and an integral, generally planar base portion 43 which is attached by the extrusion process to the periphery 9 of the door 4. The base part 43 may be formed to have a high rigidity relative to the sealing part 39. This provides for secure fixing and locating of the seal 37 onto the periphery 9 of the door 4. The relative softness of the sealing part 39 provides for effective sealing against the opening of the vehicle body against which the sealing part 39 will be compressed when the door 4 is shut in use.

The precise form of the seal and the type of extrusion process to form the seal may be selected from the many known types of seal and extrusion processes.

Figure 5 shows an alternative embodiment in which the extrusion die 15 has been modified to form a continuous mounting strip 44 around the periphery 9 of a door 4. Like the first embodiment, the extrusion die 15 is fixed, and the door 4 is moved with respect to the fixed extrusion die 15. The mounting strip 44 comprises a bar 45 extending generally perpendicularly to the periphery 9 of the door 4 and an integral enlarged head portion 47. The mounting strip 44 is generally T-shaped. The base of the bar 45 is extruded onto the periphery 9.

The mounting strip 44 allows for the subsequent mounting of a sealing strip 49 around the periphery 9 of the door 4 by engaging the sealing strip 49 with the mounting strip 45.

The sealing strip 49 of Figure 5 comprises a relatively soft tubular portion 51 defining a hollow space 53, which act in a similar manner to the sealing part 39 and hollow space 41 of the seal 37 shown in Figure 4. The sealing part 51 is mounted on a relatively rigid base 55. From the opposite side of the base 55 extend two opposing resiliently deformable gripping lips 56. The base 55 and the lips 56 form a recess 58 sized to accommodate the head 47 of the mounting strip 44. The sealing strip 49 is mounted to the mounting strip 44 by pushing the sealing strip 49 in the direction of arrow X towards the mounting strip 44. The inclined edges 60 of the head 47 cause the lips 56 to deform and slide along the inclined surfaces 60. Continued movement of the sealing strip 49 in the direction X eventually causes the lips 56 to pass under the head 47, whereafter they resile and clamp the sealing strip 49 securely to the mounting strip 44. To facilitate mounting of the sealing strip 49 over the head 47, the outer edges 62 of the lips 56 have inclination generally matching the inclination of the inclined surfaces 60 of the head 47. The inclined surfaces 62 of the lips 56 may be provided with a low friction surface 64 to further aid mounting of the sealing strip 49 on the mounting strip 44.

The mounting strip 44 is extruded to form a member which is rigid relative to the lips 56 to facilitate proper mounting of the sealing strip 49 to the mounting strip 44 and secure locating of the sealing strip once mounted.

The mounting strip 44 may be formed of PU (polyurethane) material.

Whilst in the second embodiment mounting strip 44 is shown as being T-shaped, alternative configurations of the mounting strip could be employed, provided that they allow co-operation with a suitably shaped base of the sealing strip 49 so that the sealing strip 49 can be secured to the mounting strip 44.

The provision of the relatively rigid mounting strip 44 may improve the sealing around the door 4. Improved sealing may be provided when the sealing strip 49 is firmly compressed between the door periphery 9 and the door opening when the door 4 closes. To achieve this it is necessary for there to be a firm support surface on the opposite side of the sealing strip 49 to the door opening. Since the peripheral surface 9 of the door 4 is almost parallel to the direction of the compressive force, the door periphery 9 cannot itself provide this firm support surface, but it is provided by the mounting strip 44.

During extrusion of the sealing strip 37 or the mounting strip 44, means may be provided to regulate the temperature of the extrudate as it exits the port 17.

Whilst in the embodiments the fixing of a sealing or mounting strip to a vehicle door is described, it should be understood that the sealing or mounting strip may be fitted to any member, assembly or component in accordance with the invention. This may be a closure member.

## Claims

1. A method of manufacturing an assembly, the method including forming the main body portion of the assembly; mounting the assembly on a movement apparatus and moving the assembly on said movement apparatus to respective processing stations, at each of which a manufacturing step of the assembly is performed, wherein at one of said processing stations a sealing or mounting strip is formed on the assembly by a fixed extrusion device (15), and, while operating the extrusion device (15) to produce the extruded sealing or mounting strip, the sealing or mounting strip is formed along a desired path on the assembly by controlled movement of the assembly with respect to the fixed extrusion device (15) by the said movement apparatus.

2. The method of claim 1, wherein other of said processing stations include a station where the assembly is painted.

3. The method of claim 1 or 2, wherein other of said processing stations include a station where further components are fitted to the assembly other than by means of extrusion.

4. The method of claim 1, 2 or 3, wherein the assembly comprises a vehicle closure member.

5. The method of claim 4, wherein the closure member is a vehicle door (4).

6. The method according to claims 4 or 5, wherein the strip is a sealing strip and comprises a base portion (43) in contact with the closure member and a compressible sealing portion (37) for sealing against a frame of the opening closed by the closure member.

7. The method of claims 1,2,3,4 or 5, wherein the strip is a mounting strip and comprises a fixing portion for co-operating with a corresponding portion of a sealing member (49) for fixing the sealing member (49) to the mounting strip (44).

8. The method of claim 7, wherein the fixing portion includes an enlarged head (47).

9. The method of claim 7 or claim 8, wherein the fixing portion is substantially T-shaped.

10. The method of claims 7, 8 or 9, wherein the mounting strip (44) is formed of PU material.

11. The method of any one of claims 1 to 10, wherein the extrusion device (15) is mounted on the floor (23) or other fixed structure of a vehicle manufacturing plant.

12. The method of any one of claims 1 to 11, including controlling the temperature of extrudate from the extrusion device (15).

13. Apparatus for manufacturing an assembly, the apparatus including a plurality of processing stations; means for forming the main body portion of the assembly; a movement apparatus for moving the assembly to respective ones of said processing stations, at each of which a manufacturing step of the assembly is performed, wherein at one of said processing stations a sealing or mounting strip is formed on the assembly by a fixed extrusion device (15), and, while operating the extrusion device (15) to produce the extruded sealing or mounting strip, the sealing or mounting strip is formed along a desired path on the assembly by controlled movement of the assembly with respect to the fixed extrusion device (15) by the said movement apparatus.

14. The apparatus of claim 13, wherein other of said processing stations include a station where the assembly is painted.

15. The apparatus of claim 13 or 14, wherein other of said processing stations include a station where further components are fitted to the assembly other than by means of extrusion.

16. The apparatus of claim 13,14 or 15, wherein the assembly comprises a vehicle closure member.

17. The apparatus of claim 16, wherein the closure member is a vehicle door (4).

18. The apparatus according to claims 16 or 17, wherein the strip is a sealing strip and comprises a base portion (43) in contact with the closure member and a compressible sealing portion (37) for sealing against a frame of the opening closed by the closure member.

19. The apparatus of claims 13,14,15,16 or 17, wherein the strip is a mounting strip and comprises a fixing portion for co-operating with a corresponding portion of a sealing member (49) for fixing the sealing member (49) to the mounting strip (44).

20. The apparatus of claim 19, wherein the fixing portion includes an enlarged head (47).

21. The apparatus of claim 19 or claim 20, wherein the fixing portion is substantially T-shaped.

22. The apparatus of claims 19,20 or 21, wherein the mounting strip (44) is formed of PU material.

23. The apparatus of any one of claims 13 to 22, wherein the extrusion device (15) is mounted on the floor (23) or other fixed structure of a vehicle manufacturing plant.

24. The apparatus of any one of claims 13 to 23, including means for controlling the temperature of extrudate from the extrusion device (15).

## Patentansprüche

1. Verfahren zum Herstellen einer Baugruppe, umfassend das Ausbilden des Hauptkörperteils der Baugruppe; das Montieren der Baugruppe auf einem Bewegungsapparat und das Bewegen der Baugruppe auf dem Bewegungsapparat in entsprechende Bearbeitungsstationen, an denen jeweils ein Herstellungsschritt der Baugruppe ausgeführt wird, wobei an einer der Bearbeitungsstationen ein Dichtungs- oder Montagestreifen an der Baugruppe durch eine feste Extrusionsvorrichtung (15) ausgebildet wird und während des Betriebs der Extrusionsvorrichtung (15) zur Erzeugung des extrudierten Dichtungs- oder Montagestreifens der Dichtungs- oder Montagestreifen längs eines gewünschten Weges an der Baugruppe durch gesteuerte Bewegung der Baugruppe gegenüber der festen Extrusionsvorrichtung (15) durch den Bewegungsapparat ausgebildet wird.

2. Verfahren nach Anspruch 1, bei dem andere der Bearbeitungsstationen eine Station umfassen, in der die Baugruppe angestrichen wird.

3. Verfahren nach Anspruch 1 oder 2, bei dem andere der Bearbeitungsstationen eine Station umfassen, in der weitere Komponenten an der Baugruppe nicht durch Extrusion angebracht werden.

4. Verfahren nach Anspruch 1, 2 oder 3, bei dem die Baugruppe ein Fahrzeugschließelement umfasst.

5. Verfahren nach Anspruch 4, bei dem das Verschließelement eine Fahrzeugtür (4) ist.

6. Verfahren nach den Ansprüchen 4 oder 5, bei dem der Streifen ein Dichtungsstreifen ist und einen Fußabschnitt (43) in Kontakt mit dem Verschließelement und einen kompressiblen Dichtungsabschnitt (37) zum Dichten gegen einen Rahmen der von dem Verschließelement geschlossenen Öffnung umfasst.

7. Verfahren nach den Ansprüche, 1,2, 3, 4 oder 5, bei dem der Streifen ein Montagestreifen ist und einen Befestigungsabschnitt zum Zusammenwirken mit einem entsprechenden Abschnitt eines Dichtungselemencs (49) umfasst, um das Dichtungselement (49) an dem Montagestreifen (44) zu befestigen.

8. Verfahren nach Anspruch 7, bei dem der Befestigungsabschnitt einen vergrößerten Kopf (47) enthält.

9. Verfahren nach Anspruch 7 oder 8, bei dem der Befestigungsabschnitt im Wesentlichen T-förmig ist.

10. Verfahren nach den Ansprüchen 7, 8 oder 9, bei dem der Montagestreifen (44) von PU-Material gebildet ist.

11. Verfahren nach einem der Ansprüche 1 bis 10, bei dem die Extrusionsvorrichtung (15) auf dem Fußboden (23) oder einer anderen festen Struktur einer Fahrzeugherstellungsfabrik montiert ist.

12. Verfahren nach einem der Ansprüche 1 bis 11, umfassend das Steuern der Temperatur des Extrudats von der Extrusionsvorrichtung (15).

13. Vorrichtung zum Herstellen einer Baugruppe, umfassend mehrere Bearbeitungsstationen; eine Einrichtung zum Erstellen des Hauptkörperabschnitts der Baugruppe; einen Bewegungsapparat zum Bewegen der Baugruppe in entsprechende der Bearbeitungsstationen, an denen jeweils ein Herstellungsschritt der Baugruppe ausgeführt wird, wobei an einer der Bearbeitungsstationen ein Dichtungs- oder Montagestreifen an der Baugruppe durch eine feste Extrusionsvorrichtung (15) ausgebildet wird und während des Betriebs der Extrusionsvorrichtung (15) zur Herstellung des extrudierten Dichtungs- oder Montagestreifens der Dichtungs- oder Montagestreifen längs eines gewünschten Weges an der Baugruppe durch gesteuerte Bewegung der Baugruppe gegenüber der festen Extrusionsvorrichtung (15) durch den Bewegungsapparat ausgebildet wird.

14. Vorrichtung nach Anspruch 13, bei der andere der Bearbeitungsstationen eine station umfassen, in der die Baugruppe angestrichen wird.

15. Vorrichtung nach Anspruch 13 oder 14, bei der andere der Bearbeitungsstationen eine Station umfassen, in der weitere Komponenten an der Baugruppe nicht mittels Extrusion angebracht werden.

16. Vorrichtung nach Anspruch 13, 14 oder 15, bei der die Baugruppe ein Fahrzeugverschließelement umfasst.

17. Vorrichtung nach Anspruch 16, bei dem das Verschließelement eine Fahrzeugtür (4) ist.

18. Vorrichtung nach den Ansprüchen 16 oder 17, bei der der Streifen ein Dichtungsstreifen und einen Fußabschnitt (43) in Kontakt mit dem Verschließelement und einen kompressiblen Dichtungsabschnitt (37) zum Dichten an einem Rahmen der von dem Verschließelement geschlossenen Öffnung umfasst.

19. Vorrichtung nach den Ansprüchen 13, 14, 15, 16 oder 17, bei der der Streifen ein Montagestreifen ist und einen Befestigungsabschnitt zum Zusammenwirken mit einem entsprechenden Abschnitt eines Dichtungselements (49) zum Befestigen des Dichtungselement (49) an dem Montagestreifen (44) umfasst.

20. Vorrichtung nach Anspruch 19, bei der der Befestigungsabschnitt einen vergrößerten Kopf (47) enthält.

21. Vorrichtung nach Anspruch 19 oder 20, bei der der Befestigungsabschnitt im Wesentlichen T-förmig ist.

22. Vorrichtung nach den Ansprüchen 19, 20 oder 21, bei der der Montagestreifen (44) aus PU-Material gebildet ist.

23. Vorrichtung nach einem der Ansprüche 13 bis 22, bei der die Extrusionsvorrichtung (15) auf dem Fußboden (23) oder anderen festen Struktur einer Fahrzeugherstellungsfabrik montiert ist.

24. Vorrichtung nach einem der Ansprüche 13 bis 23, enthaltend eine Einrichtung zum Steuern der Temperatur des Extrudats von der Extrusionsvorrichtung (15).

## Revendications

1. Procédé de fabrication d'un ensemble, le procédé incluant la formation de la partie de corps principal de l'ensemble ; le montage de l'ensemble sur un appareil en mouvement et le déplacement de l'ensemble sur ledit appareil en mouvement vers des stations de traitement respectives, à chacune desquelles une étape de fabrication de l'ensemble est effectuée, dans laquelle à l'une desdites stations de traitement une bande d'étanchéité ou de montage est formée sur l'ensemble par un dispositif d'extrusion fixe (15), et, pendant l'opération du dispositif d'extrusion (15) pour produire la bande d'étanchéité ou de montage, la bande d'étanchéité ou de montage est formée le long d'un trajet souhaité sur l'ensemble par un mouvement contrôlé de l'appareil par rapport au dispositif d'extrusion fixe (15) par ledit appareil en mouvement.

2. Procédé selon la revendication 1, dans lequel une autre desdites stations de traitement inclut une station où l'ensemble est peint.

3. Procédé selon la revendication 1 ou 2, dans lequel une autre desdites stations de traitement inclut une station où d'autres composants sont ajustés sur l'ensemble par un autre moyen que l'extrusion.

4. Procédé selon la revendication 1, 2 ou 3, dans lequel l'ensemble comprend un élément de fermeture de véhicule.

5. Procédé selon la revendication 4, dans lequel l'élément de fermeture est une portière de véhicule (4).

6. Procédé selon la revendication 4 ou 5, dans lequel la bande est une bande d'étanchéité et comprend une partie de base (43) en contact avec l'élément de fermeture et une partie d'étanchéité compressible (37) pour être fixée de manière étanche à une structure de l'ouverture fermée par l'élément de fermeture.

7. Procédé selon les revendications 1, 2, 3, 4 ou 5, dans lequel la bande est une bande de montage et comprend une partie de fixation destinée à coopérer avec une partie correspondante d'un élément d'étanchéité (49) pour fixer l'élément d'étanchéité (49) à la bande de montage (44).

8. Procédé selon la revendication 7, dans lequel la partie de fixation inclut une tête agrandie (47).

9. Procédé selon la revendication 7 ou la revendication 8, dans lequel la partie de fixation est sensiblement en forme de T.

10. Procédé selon les revendications 7, 8 ou 9, dans lequel la bande de montage (44) est formée d'un matériau PU.

11. Procédé selon l'une quelconque des revendications 1 à 10, dans lequel le dispositif d'extrusion (15) est monté sur le sol (23) ou sur une autre structure fixe d'une usine de fabrication de véhicule.

12. Procédé selon l'une quelconque des revendications 1 à 11, incluant le contrôle de la température de l'extrudat issu du dispositif d'extrusion (15).

13. Appareil de fabrication d'un ensemble, l'appareil incluant une pluralité de stations de traitement ; des moyens destinés à former la partie de corps principal de l'ensemble ; un appareil en mouvement destiné à déplacer l'ensemble vers chacune desdites stations respectives, à chacune desquelles une étape de fabrication de l'ensemble est effectuée, dans laquelle à chacune desdites stations de traitement une bande d'étanchéité ou de montage est formée sur l'ensemble par un dispositif d'extrusion fixe (15), et, pendant le fonctionnement du dispositif d'extrusion (15) pour produire la bande d'étanchéité ou de montage extrudée, la bande d'étanchéité ou de montage est formée le long d'un trajet souhaité sur l'ensemble par un mouvement contrôlé de l'ensemble par rapport au dispositif d'extrusion fixe (15) par ledit appareil en mouvement.

14. Appareil selon la revendication 13, dans lequel une autre desdites stations de traitement inclut une station où l'ensemble est peint.

15. Appareil selon la revendication 13 ou 14, dans lequel une autre desdites stations de traitement incluent une station où d'autres composants sont ajustés à l'ensemble par un moyen autre que l'extrusion.

16. Appareil selon la revendication 13, 14 ou 15, dans lequel l'ensemble comprend un élément de fermeture de véhicule.

17. Appareil selon la revendication 16, dans lequel l'élément de fermeture est une porte de véhicule (4).

18. Appareil selon les revendications 16 ou 17, dans lequel la bande est une bande d'étanchéité et comprend une partie de base (43) en contact avec l'élément de fermeture et une partie d'étanchéité compressible (37) pour être fixée de manière étanche à une structure de l'ouverture fermée par l'élément de fermeture.

19. Appareil selon les revendications 13, 14, 15, 16 ou 17, dans lequel la bande est une bande de montage et comprend une partie de fixation destinée à coopérer avec une partie correspondante d'un élément d'étanchéité (49) pour fixer l'élément d'étanchéité (49) à la bande de montage (44).

20. Appareil selon la revendication 19, dans lequel la partie de fixation inclut une tête agrandie (47).

21. Appareil selon la revendication 19 ou la revendication 20, dans lequel la partie de fixation est sensiblement en forme de T.

22. Appareil selon les revendications 19, 20 ou 21, dans lequel la bande de montage (44) est formée de matériau PU.

23. Appareil selon l'une quelconque des revendications 13 à 22, dans lequel le dispositif d'extrusion (15) est monté sur le sol (23) ou sur une autre structure fixe d'une usine de fabrication de véhicule.

24. Appareil selon l'une quelconque des revendications 13 à 23, incluant le contrôle de la température de l'extrudat issu du dispositif d'extrusion (15).
